# EUROPEAN PATENT SPECIFICATION

(11) **EP 3 715 941 B1**
(45) Date of publication and mention of the grant of the patent: **03.09.2025**
(21) Application number: 19206172.9
(22) Date of filing: 30.10.2019
(51) Int. Cl.: G02F 1/13357

(54) **TERMINAL AND LIQUID CRYSTAL MODULE**
ENDGERÄT UND FLÜSSIGKRISTALLMODUL
TERMINAL ET MODULE À CRISTAUX LIQUIDES

(30) Priority: 29.03.2019 CN 201910253169
(43) Date of publication of application: 30.09.2020
(73) Proprietor: Beijing Xiaomi Mobile Software Co., Ltd., Beijing Beijing 100085 (CN)
(72) Inventor: YEN, Chiafu, Beijing, Beijing 100085 (CN); GU, Jianglin, Beijing, Beijing 100085 (CN)
(74) Representative: dompatent von Kreisler Selting Werner - Partnerschaft von Patent- und Rechtsanwälten mbB

(56) References cited:
- EP-A1- 3 889 678
- CN-A- 107 784 989
- CN-A- 108 919 544
- CN-A- 109 272 868
- CN-A- 109 459 880
- US-A1- 2021 271 296
- US-B1- 10 534 221

## Description

### TECHNICAL FIELD

The present disclosure belongs to the field of display technology and relates to a terminal and a liquid crystal module.

### BACKGROUND

Terminals are provided with sensors, such as cameras and optical fingerprint sensors, and such type of sensors are usually disposed at the front panel of the terminal.

For the purpose of increasing the screen-to-body ratio of the terminal, the current mainstream method is to design an under-screen sensor. In such design, the sensor is disposed below the display screen, and the position of the display screen corresponding to the sensor is constructed as a through hole structure. The through hole structure includes an opening A in the liquid crystal layer and an opening B of the backlight assembly, and the opening B is configured to place the sensor.

In the above design, since after the openings are formed in the liquid crystal screen, the opening A in the liquid crystal layer needs to be subjected to a liquid crystal edge sealing treatment, and the opening B of the backlight assembly needs to be subjected to a light-shielding treatment, the black edge of the liquid crystal screen at the through hole will be too wide, which seriously affects the aesthetics of the terminal.

CN109459880A discloses a display module and a display device. The display module includes a cover plate, a display screen, and a backlight module. The display screen includes a display region, a first non-display region, and at least one first hollowed-out part. The at least one first hollowed-out part penetrates through the display screen. The backlight module includes a metal frame and at least one second hollowed-out part penetrating through the backlight module. The metal frame includes a main part and a first bending part connected to the main part. The first bending part is disposed on inner sidewalls of the at least one second hollowed-out part and is opaque. The first bending part intersects a plane for the main part; and one end of the first bending part away from the main part extends inside the at least one first hollowed-out part. Further similar prior art devices are disclosed in CN 108919544 A and in CN 109272868 A.

### SUMMARY

The aspects of the present disclosure provide a terminal and a liquid crystal display screen.

According to a first aspect of the present disclosure, there is provided a terminal according to appended claim 1.

Optionally, the first opening, when viewed in a plan view, comprises at least one of a circular opening, a water drop-shaped opening, an elliptical opening, a rectangular opening, and an irregular shaped opening;
or;
the first opening comprises a semi-open groove structure formed at the edge of the backlight assembly.

The technical solution provided by the embodiments of the present disclosure at least includes the following beneficial effects.

Only the backlight assembly below the unpunched liquid crystal layer will be punched, the unpunched liquid crystal layer will not be punched, the sensor or the photosensitive portion of the sensor is disposed in the first opening below the unpunched liquid crystal layer, and the liquid crystal edge sealing operation is not required, thereby avoiding that the black edge of the liquid crystal screen at the through hole is too wide. Since the light-shielding layer is disposed on the sidewall of the first opening, a support structure is not required, and the area of the unpunched liquid crystal layer occupied by the light-shielding layer is relatively small, thereby effectively reducing the width of the black edge at the first opening and improving the aesthetics of the terminal.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 shows a side cross-sectional schematic view of a terminal in the related art.
FIG. 2 shows a side cross-sectional schematic view of a terminal according to an example not forming part of the claimed invention.
FIG. 3 shows a schematic diagram of a first opening structure of a terminal according to an embodiment of the present invention.
FIG. 4 shows a schematic diagram of a liquid crystal display screen of a terminal according to an embodiment of the present invention.
FIG. 5 shows a side cross-sectional schematic view of a terminal according to an embodiment of the present invention.
FIG. 6 shows a cross-sectional side schematic view of a terminal according to an embodiment of the present invention.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of devices and methods consistent with aspects related to the disclosure as recited in the appended claims.

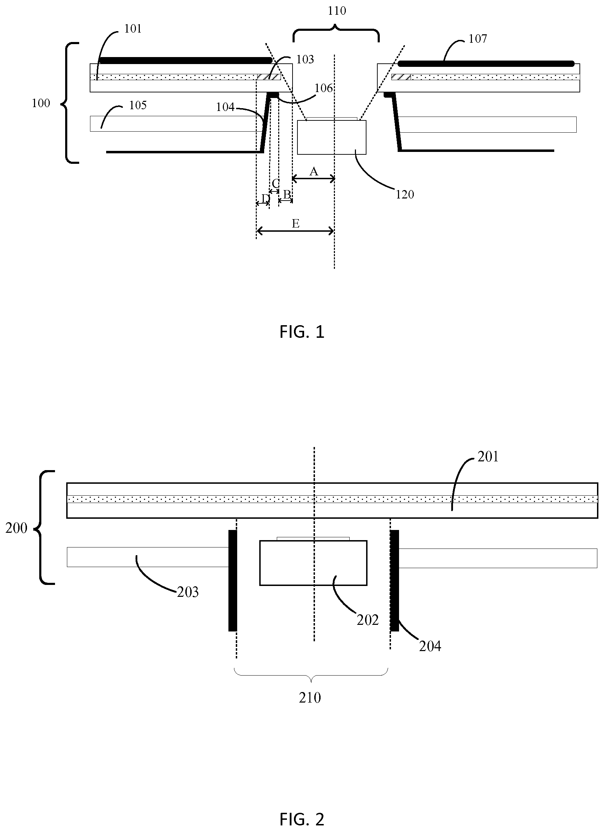

FIG. 1 illustrates a side cross-sectional schematic view of a terminal in the related art. The terminal includes a liquid crystal display screen 100 and a sensor 120 disposed below the liquid crystal display screen.

The liquid crystal display screen 100 includes a liquid crystal layer 101 and a backlight assembly 105 disposed below the liquid crystal layer 101, and the liquid crystal layer 101 and the backlight assembly 105 are disposed in a stacked manner. The liquid crystal layer is provided with a first opening, and the backlight assembly 105 is provided with a second opening. The first opening and the second opening form a through hole 110 of the liquid crystal display screen.

The liquid crystal layer 101 includes an upper glass substrate, a lower glass substrate, and liquid crystal disposed between the upper glass substrate and the lower glass substrate. Since the first opening is disposed in the liquid crystal layer 101, in order to prevent the liquid crystal from flowing out, the first opening of the liquid crystal layer 101 is provided with a liquid crystal sealing edge 103, and the liquid crystal sealing edge has a first width.

The backlight assembly 105 at least includes a light source and a light guide plate. In order to prevent the light source of the backlight assembly 105 from affecting the operation of the sensor 120, an iron frame structure 104 is disposed around the second opening. The iron frame structure 104 is fixed on the lower glass substrate of the liquid crystal layer 101 by an iron frame sealant 106. The iron frame structure 104 and the iron frame sealant 106 have a second width.

In the related art, in order to ensure that the sensor disposed below the screen works normally, it is necessary to set the viewing angle of the sensor, the reserved gap A of the liquid crystal sealing edge 103, the distance B between the iron frame sealant 106 and the viewing angle, the size C of the iron frame sealant 106, as well as the size D of the iron frame structure 104 and the liquid crystal sealing edge 103, and the first width and the second width are combined. As a result, the black edge at the through hole 110 is too wide, which seriously affects the aesthetics of the terminal.

FIG. 2 shows a side cross-sectional schematic view of a terminal provided by an example of the present disclosure. The terminal includes a liquid crystal display screen 200 and a sensor 202. The liquid crystal display screen 200 has a top side and bottom side. The top side faces the user and the bottom side faces the device. The liquid crystal display screen 200 includes a liquid crystal layer 201 and a backlight assembly 203 located below the liquid crystal layer 201.

The liquid crystal layer 201 includes an upper glass substrate, a lower glass substrate, and liquid crystal disposed between the upper glass substrate and the lower glass substrate and configured to display picture content.

The backlight assembly 203 is provided with a first opening 210, and the sensor 202 is mounted inside or below the first opening 210. In another example, the backlight assembly 203 at least includes a light source and a light guide plate, and is configured to provide a light source with uniform brightness for the liquid crystal display screen 200.

The sidewall of the first opening 210 is provided with a light-shielding layer 204. The light-shielding layer 204 is configured to prevent the light emitted by the backlight assembly 203 from interfering with the operation of the sensor 202.

For example, the light-shielding layer 204 is attached to the sidewall of the first opening 210, and does not need a support structure, so that the light emitted by the backlight assembly 203 around the first opening is effectively blocked in a case where the occupied regional area of the liquid crystal layer 201 is relatively small.

According to the present example, only the backlight assembly below the liquid crystal layer will be punched, the liquid crystal layer will not be punched, the sensor or the photosensitive portion of the sensor is disposed in the first opening below the liquid crystal layer, and the liquid crystal edge sealing operation is not required, thereby avoiding that the black edge of the liquid crystal screen at the through hole is too wide. Since the light-shielding layer is disposed on the sidewall of the first opening, a support structure is not required, and the area of the liquid crystal layer occupied by the light-shielding layer is relatively small, thereby effectively reducing the width of the black edge at the first opening and improving the aesthetics of the terminal.

In another embodiment based on FIG. 2, the light-shielding layer 204 is light-shielding coating formed on the sidewall. After being disposed on the sidewall of the first opening 210, the light-shielding coating can absorb or reflect the light of the backlight assembly 203 for preventing the light emitted by the backlight assembly 203 from interfering with the operation of the sensor 202. Illustratively, the light-shielding coating may be silicone coating or fluorocarbon coating, etc. It should be noted that the above light-shielding coatings are only examples, and other coatings may also be used. The present embodiment does not limit the type and component of the light-shielding coating.

In one implementation, the light-shielding layer 204 is a light-shielding film formed on the sidewall. The light-shielding film is a film-like structure and is disposed on the sidewall of the first opening 210.

In an alternative implementation, the light-shielding film is formed on the sidewall by a coating process or a screen-printing process. A projection of the light-shielding layer onto the liquid crystal layer has a thickness of less than 0.4mm.

Since the light-shielding film is a film-like structure, when the light-shielding film is disposed on the sidewall of the first opening 210, no gap is formed between the layers in the backlight assembly 203, and it can be ensured that the sidewall of the first opening is in a light-shielding state. Meanwhile, due to the coating or screen-printing process, the light-shielding material can be set to be a relatively thin film structure, and the light-shielding layer 204 is attached to the sidewall of the first opening 210. Therefore, the support structure is not required, no gap is formed between the support structure and the backlight assembly, and no further excessive space under the screen is occupied, thereby effectively reducing and the unrealistic regional area of the liquid crystal layer 201, and further reducing the black edge width at the first opening 210.

For example, the sensor 202 is a photosensitive sensor. The sensor 202 is a sensor which operates according to received external light. Illustratively, the sensor 202 includes any one of a camera, a distance sensor, and an ambient light sensor.

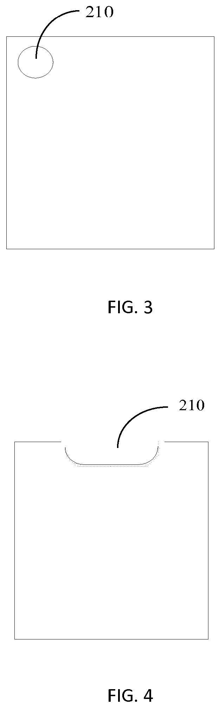

Based on the embodiment of FIG. 2, in conjunction with FIG. 3, FIG. 3 is a structural schematic diagram of a first opening of a terminal provided by an embodiment of the present invention. The first opening 210 is an edge-closed opening structure. For example, the shape of the first opening 210 includes at least one of a circular opening, a water drop-shaped opening, an elliptical opening, a rectangular opening, and an irregular shaped opening. Alternatively, the first opening includes a semi-open groove structure formed at the edge of the backlight assembly. In conjunction with FIG. 4, FIG. 4 is a schematic diagram of a liquid crystal display screen of a terminal provided by another embodiment of the present invention. The first opening 210 below the liquid crystal layer is a semi-open structure, which includes a semi-open rounded rectangular shape (fringe screen), or a semi-open semi-circular (pearl screen) structure.

For example, the opening is formed by laser breakdown, or die cutting.

For example, the first opening 210 is perpendicular to the liquid crystal layer 201, and the photosensitive portion of the sensor 202 or the sensor 202 is disposed in the first opening 210 or below the first opening 210. External light passes through the transparent the liquid crystal layer 201 and enters the sensor 202, so that the sensor 202 can operate normally.

It should be noted that, in the present embodiment, the shape, the forming manner, and the opening angle of the first opening 210 are only examples, and can be adjusted correspondingly according to the actual situation, which is not limited in this disclosure.

According to the embodiment, the opening is disposed below the liquid crystal layer. Since edge sealing of the liquid crystal layer is not involved, the shape of the opening can be flexibly set according to the type and shape of the sensor, and can be applied to the design of most under-screen sensors.

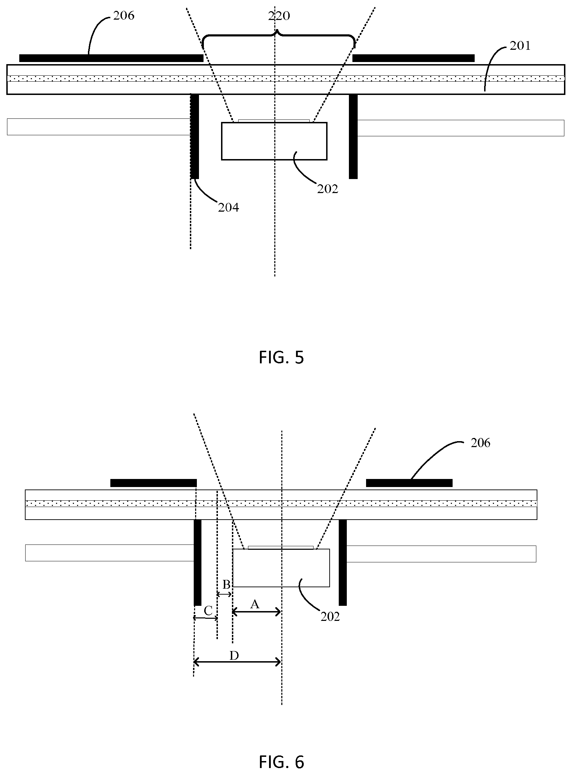

FIG. 5 illustrates a side cross-sectional schematic view of a terminal provided by an embodiment of the present invention. The liquid crystal layer 201 is a thin-film-transistor (TFT) liquid crystal layer. The TFT liquid crystal layer is further provided with a polarizer 206. A second opening 220 is formed in the region of the polarizer 206 corresponding to the first opening 210.

In order to ensure the display effect and brightness adjustment of the TFT liquid crystal layer, the polarizer 206 is disposed on the TFT liquid crystal layer in an attaching manner, and the polarizer 206 is provided with the second opening 220 matched with the first opening 210 in position.

The second projection range of the second opening 220 onto the liquid crystal layer covers the first projection range of the first opening 210 onto the liquid crystal layer, that is, the second projection range of the second opening 220 is not less than the first projection range of the first opening 210 onto the liquid crystal layer, and the first projection range is within the second projection range. The first projection range and the second projection range refer to the regions of the liquid crystal layer 201, which are formed by the fact that the second opening 220 and the first opening 210 are subjected to projection operation in a manner of being perpendicular to the liquid crystal layer 201.

The second projection range is not less than the range of the viewing angle of the sensor 202. The viewing angle is the angle of the maximum light-taking range of the sensor 202. By taking the camera as an example of the sensor 202, the viewing angle of the camera is the maximum viewing range that can be obtained by the camera without interference. In order to ensure that the polarizer 206 does not affect the viewing range of the camera, the second opening 220 on the polarizer should be set to be equal to or slightly larger than the range of the viewing angle. In an example implementation manner, the sensor is not limited to the camera, and may be at least one of an ambient light sensor, a distance sensor, or a photosensitive fingerprint sensor.

In conjunction with FIG. 6, the liquid crystal layer does not need the edge sealing operation, and the liquid crystal display range is only decided by the size A of the sensor per se, the distance B between the viewing angle and the point of intersection between the upper and lower glass substrates, and the gap C reserved between the polarizer and the viewing angle. The thickness of the light-shielding film is relatively low and is generally smaller than the range of the distance B, and the light-shielding layer does not require an additional space for a support member. Therefore, the influence of the light-shielding layer on the unrealistic region of the terminal display screen can be controlled to be a smaller value, and the width of the black edge of the liquid crystal screen at the opening is further reduced.

Understandably, the term "plurality" herein refers to two or more. "And/or" herein describes the correspondence of the corresponding objects, indicating three kinds of relationship. For example, A and/or B, can be expressed as: A exists alone, A and B exist concurrently, B exists alone. The character "/" generally indicates that the context object is an "OR" relationship.

The numerals in the present disclosure are merely intended for description and do not represent any merits.

Persons of ordinary skill in the art can understand that all or part of the steps described in the above embodiments can be completed through hardware, or through hardware instructed by applications stored in a non-transitory computer readable storage medium, such as a read-only memory, a disk or a CD, etc.

The foregoing descriptions are merely preferred embodiments of the present invention, and are not intended to limit the present invention. Within the concept and principles of the invention, any modification shall be within the scope of the appended claims.

## Claims

1. A terminal, comprising: a liquid crystal display screen (200) and a sensor (202), wherein the liquid crystal display screen (200) comprises a liquid crystal cell (201) and a backlight assembly (203), wherein no through-hole is present in the liquid crystal cell (201), wherein,
the backlight assembly (203) is located below the liquid crystal cell (201) and comprises a first opening (210);
the first opening (210) is formed in the backlight assembly (203), and a light-shielding layer (204) is disposed on the entire sidewall of the first opening (210); and
the sensor (202) is mounted inside or below the first opening (210), and the sensor (202) is disposed below the liquid crystal cell (201), and the light-shielding layer (204) is configured to prevent the light emitted by the backlight assembly (203) from interfering with the sensor (202); wherein
the light-shielding layer (204) is a light-shielding coating or a light-shielding film formed on the sidewall by either a coating process or a screen-printing process;
the liquid crystal cell (201) comprises an upper glass substrate, a lower glass substrate, and a liquid crystal disposed between the upper glass substrate and the lower glass substrate; an orthographic projection of the light-shielding layer (204) onto the liquid crystal cell (201) has a thickness of less than 0.4 mm;
the liquid crystal cell (201) is a thin-film-transistor (TFT) liquid crystal cell comprising a polarizer (206) , wherein the polarizer (206) is disposed on the TFT liquid crystal cell in an attaching manner;
a second opening (220) is formed in a region of the polarizer (206) corresponding to the first opening (210); and
a second orthographic projection area of the second opening (220) onto the liquid crystal cell (201) covers a first orthographic projection area of the first opening (210) onto the liquid crystal cell (201), and/or the second orthographic projection area is not less than an area corresponding to the viewing angle of the sensor (202).

2. The terminal according to claim 1, wherein
the first opening (210), when viewed in a plan view, comprises at least one of a circular opening, a water drop-shaped opening, an elliptical opening, a rectangular opening, and an irregular shaped opening; or
the first opening (210) comprises a semi-open groove structure formed at the edge of the backlight assembly (203).

## Patentansprüche

1. Endgerät, das aufweist: einen Flüssigkristallanzeigebildschirm (200) und einen Sensor (202), wobei der Flüssigkristallanzeigebildschirm (200) eine Flüssigkristallzelle (201) und eine Hinterleuchtungsbaugruppe (203) aufweist, wobei in der Flüssigkristallzelle (201) kein Durchgangsloch vorhanden ist, wobei
die Hinterleuchtungsbaugruppe (203) sich unterhalb der Flüssigkristallzelle (201) befindet und eine erste Öffnung (210) aufweist;
die erste Öffnung (210) in der Hinterleuchtungsbaugruppe (203) ausgebildet ist und eine Lichtabschirmschicht (204) auf der gesamten Seitenwand der ersten Öffnung (210) angeordnet ist; und
der Sensor (202) in oder unterhalb der ersten Öffnung (210) montiert ist, und wobei der Sensor (202) unterhalb der Flüssigkristallzelle (201) angeordnet ist, und wobei die Lichtabschirmschicht (204) so ausgebildet ist, dass sie verhindert, dass das von der Hinterleuchtungsbaugruppe (203) emittierte Licht den Sensor (202) stört; wobei
die Lichtabschirmschicht (204) eine Lichtabschirmbeschichtung oder ein Lichtabschirmfilm ist, die/der entweder durch ein Beschichtungsverfahren oder ein Siebdruckverfahren auf der Seitenwand ausgebildet wird;
die Flüssigkristallzelle (201) ein oberes Glassubstrat, eine unteres Glassubstrat, und einen Flüssigkristall aufweist, der zwischen dem oberen Glassubstrat und dem unteren Glassubstrat angeordnet ist;
eine orthografische Projektion der Lichtabschirmschicht (204) auf die Flüssigkristallzelle (201) eine Dicke von weniger als 0,4 mm hat;
die Flüssigkristallzelle (201) eine Dünnschichttransistor-(TFT)-Flüssigkristallzelle ist, die einen Polarisator (206) aufweist, wobei der Polarisator (206) auf der TFT-Flüssigkristallzelle in einer befestigenden Art und Weise angeordnet ist;
eine zweite Öffnung (220) in einem Bereich des Polarisators (206) ausgebildet ist, welcher der ersten Öffnung (210) entspricht; und
ein zweiter orthografischer Projektionsbereich der zweiten Öffnung (220) auf die Flüssigkristallzelle (201) einen ersten orthografischen Projektionsbereich der ersten Öffnung (210) auf die Flüssigkristallzelle (201) bedeckt, und/oder der zweite orthografische Projektionsbereich nicht kleiner ist als ein Bereich, der dem Sichtwinkel des Sensors (202) entspricht.

2. Endgerät nach Anspruch 1, wobei
die erste Öffnung (210) in der Draufsicht betrachtet mindestens eines aus einer kreisrunden Öffnung, einer wassertropfenförmigen Öffnung, einer elliptischen Öffnung, einer rechteckigen Öffnung, und einer unregelmäßig geformten Öffnung aufweist; oder
die erste Öffnung (210) eine halboffene Nutstruktur aufweist, die an dem Rand der Hinterleuchtungsbaugruppe (203) ausgebildet ist.

## Revendications

1. Terminal, comprenant : un écran d'affichage à cristaux liquides (200) et un capteur (202), dans lequel l'écran d'affichage à cristaux liquides (200) comprend une cellule de cristaux liquides (201) et un ensemble de rétroéclairage (203), dans lequel aucun trou traversant n'est présent dans la cellule de cristaux liquides (201), dans lequel,
l'ensemble de rétroéclairage (203) est situé au-dessous de la cellule de cristaux liquides (201) et comprend une première ouverture (210) ;
la première ouverture (210) est ménagée dans l'ensemble de rétroéclairage (203), et une couche de protection contre la lumière (204) est disposée sur toute la paroi latérale de la première ouverture (210) ; et
le capteur (202) est monté à l'intérieur ou au-dessous de la première ouverture (210), et le capteur (202) est disposé au-dessous de la cellule de cristaux liquides (201),
et la couche de protection contre la lumière (204) est configurée pour empêcher que de la lumière émise par l'ensemble de rétroéclairage (203) n'interfère avec le capteur (202) ; dans lequel
la couche de protection contre la lumière (204) est un revêtement de protection contre la lumière ou un film de protection contre la lumière formé sur la paroi latérale soit par un processus de revêtement soit par un processus de sérigraphie ;
la cellule de cristaux liquides (201) comprend un substrat de verre supérieur, un substrat de verre inférieur, et des cristaux liquides disposés entre le substrat de verre supérieur et le substrat de verre inférieur ;
une projection orthographique de la couche de protection contre la lumière (204) sur la cellule de cristaux liquides (201) a une épaisseur inférieure à 0,4 mm ;
la cellule de cristaux liquides (201) est une cellule de cristaux liquides de transistor à couches minces (TFT) comprenant un polariseur (206), dans lequel le polariseur (206) est disposé sur la cellule de cristaux liquides de TFT d'une manière par fixation ;
une seconde ouverture (220) est ménagée dans une région du polariseur (206) correspondant à la première ouverture (210) ; et
une seconde superficie de projection orthographique de la seconde ouverture (220) sur la cellule de cristaux liquides (201) couvre une première superficie de projection orthographique de la première ouverture (210) sur la cellule de cristaux liquides (201), et/ou la seconde superficie de projection orthographique n'est pas plus petite qu'une superficie correspondant à l'angle de visualisation du capteur (202).

2. Terminal selon la revendication 1, dans lequel
la première ouverture (210), lorsqu'observée dans une vue en plan, comprend au moins l'une d'une ouverture circulaire, d'une ouverture en forme de goutte d'eau, d'une ouverture elliptique, d'une ouverture rectangulaire et d'une ouverture de forme irrégulière ; ou
la première ouverture (210) comprend une structure de rainure semi-ouverte ménagée au niveau du bord de l'ensemble de rétroéclairage (203).
